# EUROPÄISCHE PATENTSCHRIFT

(11) **EP 0 925 168 B1**
(45) Veröffentlichungstag und Bekanntmachung des Hinweises auf die Patenterteilung: **01.08.2001**
(21) Anmeldenummer: 97942815.8
(22) Anmeldetag: 09.09.1997
(51) Int. Cl.: B29C 65/32, B29C 65/36, B29C 65/18, F28F 9/18

(54) **VERFAHREN ZUR SCHWEISSTECHNISCHEN VERBINDUNG EINES WÄRMETAUSCHERROHRS MIT EINER KUNSTSTOFFOLIE**
PROCESS FOR JOINING BY WELDING A HEAT EXCHANGER PIPE TO A PLASTIC FOIL
PROCEDE D'ASSEMBLAGE PAR SOUDAGE D'UN TUBE D'ECHANGEUR THERMIQUE AVEC UNE FEUILLE PLASTIQUE

(30) Priorität: 10.09.1996 DE 19636670
(43) Veröffentlichungstag der Anmeldung: 30.06.1999
(73) Patentinhaber: Balcke-Dürr Energietechnik GmbH, 40882 Ratingen (DE); Kunststofftechnik Dinslaken GmbH, 46539 Dinslaken (DE)
(72) Erfinder: OTTERSBACH, Frank, D-46562 Voerde (DE); BOSSERHOFF, Whilhelm, D-46562 Voerde (DE); STAMM, Ludwig, D-45897 Gelsenkirchen (DE)
(74) Vertreter: Ksoll, Peter, Dr.-Ing.
(86) Internationale Anmeldenummer: DE9701999
(87) Internationale Veröffentlichungsnummer: WO9810915

(56) Entgegenhaltungen:
- EP-A- 0 059 287
- EP-A- 0 095 082
- EP-A- 0 281 396
- EP-A- 0 314 970
- WO-A-81/02405
- WO-A-91/09247
- DE-A- 1 479 530
- US-A- 2 810 053
- US-A- 3 353 849
- US-A- 4 353 355
- US-A- 5 160 396
- US-A- 5 416 303
- PATENT ABSTRACTS OF JAPAN vol. 009, no. 060 (M-364), 16.März 1985 & JP 59 194807 A (NIPPON RADIATOR KK), 5.November 1984,
- PATENT ABSTRACTS OF JAPAN vol. 006, no. 253 (M-178), 11.Dezember 1982 & JP 57 148619 A (HONSHIYUU SEISHI KK), 14.September 1982,

## Beschreibung

Die Erfindung betrifft ein Verfahren zur schweißtechnischen Verbindung des Endbereichs eines kunststoffummantelten Wärmetauscherrohrs mit einer einen Rohrboden eines Wärmetauschers flächig auskleidenden Kunststoffolie.

Rohrbündelwärmetauscher werden wegen der vielseitigen Verwendbarkeit für gasförmige und flüssige Stoffe in weiten Temperatur- und Druckbereichen in vielen Industriezweigen eingesetzt. Die Rohrbündel setzen sich aus einer Vielzahl von Rohren zusammen, welche in Rohrböden gehalten werden. Durch die Rohre wird im Betrieb eines der Tauschermedien geleitet, während auf der Außenseite im sogenannten Mantelweg das andere Tauschermedium geführt wird.

Beim Betrieb von Anlagen, beispielsweise zur Vorwärmung von Verbrennungsluft in Kraftwerken oder zur Wärmerückgewinnung in Müllverbrennungs- und Industrieanlagen, entstehen heiße und aggressive Gase mit hochkorrosiven Bestandteilen. Um die von den Gasen durchströmten Bereiche bzw. die stählernen Wände dieser Strömungsbereiche vor den nachteiligen Einwirkungen der aggressiven Gase zu schützen, ist es bekannt, die Innenflächen mit einer korrosions- und temperaturbeständigen Kunststoffolie auszukleiden. Die Rohre des Rohrbündelwärmetauschers bestehen dann ebenfalls aus Kunststoff oder sind mindestens mit einer Kunststoffummantelung versehen.

Für einen wirksamen Korrosionsschutz muß eine in sich geschlossene Auskleidung des Wärmetauschers realisiert werden. Hohe Anforderungen werden hierbei unter anderem an eine mediendichte Verbindung der Wärmetauscherrohre mit der die Rohrböden auskleidenden Kunststoffolie gestellt.

Die Verbindung wird bislang vorwiegend durch eine manuell ausgeführte Warmgasverschweißung hergestellt. Hierbei werden die zu verbindenden Teile durch Warmgas in den plastischen Zustand überführt und verschweißt. Üblicherweise wird bei der Verschweißung zusätzlicher Werkstoff zugeführt, in dem ein Kunststoffstab mit aufgeschmolzen wird.

Diese Vorgehensweise erfordert einen ziemlich hohen zeitlichen Aufwand. Auch hängt die Qualität der Verbindung in starkem Maße von der Sorgfalt und dem Geschick des Schweißpersonals ab.

Durch die JP-A-59194807 in Patents Abstracts of Japan, vol. 009, no. 060 (M-364) zählt ein Wärmetauscher zum Stand der Technik mit Wärmetauscherrohren aus einem synthetischen Harz, die in einer ebenfalls aus synthetischem Harz bestehenden Basisplatte schweißtechnisch durch induktive Erwärmung festgelegt sind. Hierzu sind sowohl im Material der Wärmetauscherrohre als dem der Basisplatte feinkörnige Metallpartikel eingebettet. Diese werden mit Hilfe einer Induktionsspule aufgeheizt, so dass es zu einem Verschweißen der Wärmetauscherrohre mit der Basisplatte kommt.

Auch durch die EP-A-0281396 oder die US-A-5416303 ist das Verschweißen von Gegenständen aus thermoplastischem Kunststoff durch induktive Erwärmung unter Nutzung eines metallischen Wärmeübertragers bekannt.

Schließlich geht aus der US-A-5160396 eine thermisch regulierbare Form zum Hochfrequenzschweißen von Kunststoffgegenständen hervor.

Der Erfindung liegt ausgehend vom Stand der Technik die Aufgabe zugrunde, ein Verfahren zu schaffen, welches eine qualitativ hochwertige fluiddichte Verbindung eines Wärmetauscherrohrs und einer Kunststoffolie ermöglicht, wobei das Verfahren rationeller durchführbar, einfacher in der Anwendung und somit insgesamt ökonomischer ist.

Die Lösung dieser Aufgabe besteht nach der Erfindung in den im Anspruch 1 aufgeführten Maßnahmen.

Bei dem Wärmetauscherrohr handelt es sich um ein kunststoffummanteltes Rohr. Der Rohrboden kann sowohl von einem Stahlblech als auch von einer geeigneten Stützkonstruktion, beispielsweise aus Drähten oder Stäben, gebildet sein.

Die den Rohrboden des Wärmetauschers auskleidende Kunststoffolie ist im Bereich der Durchbrechungen des Rohrbodens mit an die Konfiguration bzw. die Abmessungen der Wärmetauscherrohre angepaßten Aussparungen versehen. Zur Herstellung der Verbindung wird nun zunächst das Wärmetauscherrohr in die Verbindungsposition mit der Kunststoffolie verbracht. Als Wärmeübertrager fungiert das metallische Innenrohr des Wärmetauscherrohrs. Die Lageorientierung des Wärmetauscherrohrs kann auch mit Hilfe eines geeigneten endseitigen Adapterstücks erfolgen.

Anschließend erfolgt eine partielle Plastifizierung des Rohrkunststoffs und der Kunststoffolie im Kontaktbereich durch induktive Erwärmung. Hierzu wird der Wärmeübertrager als Heizelement benutzt. Im Kontaktbereich entsteht ein inniges homogenes Stoffgemisch, so daß sich mit dem Erkalten des aufgeschmolzenen Kunststoffs eine einwandfreie fluiddichte Verbindung von Wärmetauscherrohr und Kunststoffolie einstellt.

Wesentlicher Bestandteil der Erfindung ist die Nutzung der induktiven Erwärmung, um die Kunststoffe des Rohrs und der Folie im Kontakt- bzw. Schweißbereich zu plastifizieren, das heißt auf die Temperatur eines viskosen Fließens zu erwärmen. Hierzu kommen Induktionsspulen geeigneter Form zum Einsatz. Der eingegliederte metallische Wärmeübertrager hat dann die Funktion einer kurzgeschlossenen Sekundärwicklung. Durch die Anwendung hoher Frequenzen mit der Induktionsspule wird der Wärmeübertrager erwärmt. Die Temperatur wird dann vom Wärmeübertrager auf den Kunststoff im Kontaktbereich übertragen und der Kunststoff aufgeschmolzen. Die Erfindung macht sich dabei die Erkenntnis zu eigen, daß die Moleküle des metallischen Wärmeleiters durch die Induktionsspule leichter und heftiger zu Schwingungen angeregt werden können als die Moleküle der zu verbindenden Kunststoffe. Das aufgeheizte Metall gibt dann die Wärme an den Kunststoff weiter, bis die gewünschte Plastifizierung eintritt.

Nach dem Erkalten des plastifizierten Kunststoffs (Schmelze) ist eine fluiddichte Verbindung von Wärmetauscherrohr und Kunststoffolie hergestellt. Auf diese Art und Weise kann eine zuverlässige, qualitativ hochwertige schweißtechnische Verbindung hergestellt werden. Das Verfahren ist betriebssicher und beliebig reproduzierbar auch bei komplizierten Geometrien. Besonders gut ist das erfindungsgemäße Verfahren für die Verbindung von unpolaren Kunststoffen geeignet.

Der Einsatz der Induktionsspule erfolgt von innen durch das Wärmetauscherrohr. Als besonders zweckmäßig bietet es sich an, die Induktionsspule durch das Innenrohr zu führen.

Das erfindungsgemäße Verfahren ermöglicht eine betriebssichere Verbindung, gleich ob das Wärmetauscherrohr und die Kunststoffolie rechtwinklig zueinander ausgerichtet sind, bereichsweise parallel aneinander liegend verlaufen oder die Stoßkanten des Wärmetauscherrohrs und die Kunststoffolie stumpf aneinander stoßen.

Der Wärmeübertrager ist durch das metallische Innenrohr selbst gebildet. Mit Hilfe der Induktionsspule wird das Innenrohr selektiv im Kontaktbereich erwärmt und die Wärme zur Plastifizierung der zu verbindenden Kunststoffe genutzt.

Gemäß den Merkmalen des Anspruchs 2 wird die Kunststoffolie bei der Lageorientierung des Wärmetauscherrohrs ausgehalst. Die Kunststoffolie liegt dann im Kontaktbereich tangential am Außenumfang des Wärmetauscherrohrs an. Die Aushalsung kann dabei grundsätzlich sowohl zum Rohrboden hin als auch von diesem weg gerichtet sein.

Eine andere Ausführungsform sieht nach Anspruch 3 vor, daß das Wärmetauscherrohr und die Kunststoffolie im Kontaktbereich rechtwinklig zueinander ausgerichtet werden. Das erfindungsgemäße Verfahren ermöglicht auch hierbei eine zuverlässige Verbindung, ohne daß Zusatzwerkstoffe benötigt werden.

Eine besonders vorteilhafte Weiterbildung des erfindungsgemäßen Grundgedankens ist in den Merkmalen des Anspruchs 4 charakterisiert. Danach wird die induktive Erwärmung material- und dimensionsabhängig geregelt. So ist eine definierte Plastifizierung der zu verbindenden Kunststoffe in den erforderlichen Abmessungen möglich.

In Abhängigkeit von den konstruktiven und materialspezifischen Vorgaben erfolgt dabei eine Regelung der Leistung, welche einerseits eine schnelle und zuverlässige Verschweißung ermöglicht und andererseits eine Schädigung der zu verbindenden Teile verhindert. Auf diese Weise läßt sich auch die Größe des plastifizierten Bereichs anwendungsgerecht bestimmen.

Zweckmäßigerweise wird die Regelung mikroprozessorgesteuert vorgenommen. Dementsprechend läßt sich eine zweckoptimierte Automatisierung mit kurzen Schweißzeiten realisieren.

Die Erfindung ist nachfolgend anhand von in den Zeichnungen dargestellten Ausführungsbeispielen näher beschrieben. Es zeigen:
- Figur 1: im vertikalen Längsschnitt einen Ausschnitt eines Wärmetauscherrohrs und einer Kunststoffolie beim Schweißvorgang;
- Figur 2: die Darstellungen der Figur 1 nach der Verschweißung;
- Figur 3: den Verbindungsbereich einer weiteren Ausführungsform nach der Verschweißung.

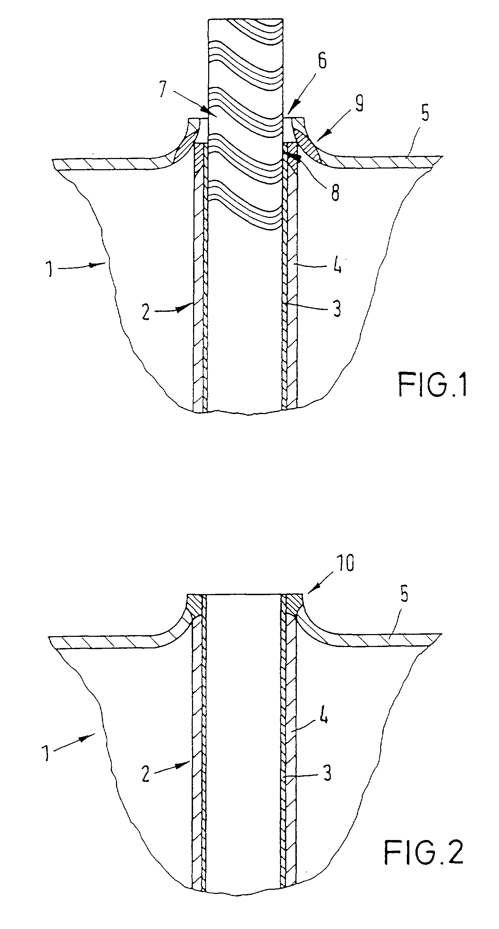

Die Darstellungen der Figuren 1 bis 3 sind technisch generalisiert und nicht maßstäblich zu verstehen.

Die Figuren 1 und 2 zeigen den Endbereich 1 eines Wärmetauscherrohrs 2. Das Wärmetauscherrohr 2 besteht aus einem metallischen Innenrohr 3 und einer schlauchartigen Ummantelung 4 aus einem unpolaren Kunststoff.

Mit 5 ist in den Figuren 1 und 2 eine Kunststoffolie bezeichnet, welche dazu dient, den Rohrboden eines hier nicht näher dargestellten Wärmetauschers flächig auszukleiden. Im Verbindungsbereich mit dem Wärmetauscherrohr 2 weist die Kunststoffolie 5 eine an die Konfiguration des Wärmetauscherrohrs 2 angepaßte Aussparung 6 auf.

Das Wärmetauscherrohr 2 und die Kunststoffolie 5 werden durch induktive Erwärmung miteinander verschweißt (vgl. Figur 1).

Hierzu wird zunächst das Wärmetauscherrohr 2 in der Verbindungsposition mit der Kunststoffolie 5 lageorientiert. Anschließend wird eine Induktionsspule 7 in das Wärmetauscherrohr 2 eingeführt und angeregt. Auf diese Weise kommt es zu einer partiellen Erwärmung des metallischen Innenrohrs 3 im Bereich der herzustellenden Verbindung. Das Innenrohr 3 fungiert so als Wärmeübertrager 8. Hierbei wird die Leistung nach dem Transformatorprinzip auf den Wärmeübertrager 8 übertragen, so daß eine definierte Heizzone entsteht.

Der Wärmeübertrager 8 heizt die Kunststoffe von Ummantelung 4 und Kunststoffolie 5 auf, bis eine partielle Plastifizierung im Kontaktbereich 9 eintritt und eine grenzflächenfreie Schmelze entsteht.

Nach dem Erkalten des plastifizierten Kunststoffs ist eine fluiddichte Verbindung 10 des Wärmetauscherrohrs 2 und der Kunststoffolie 5 hergestellt (vgl. Figur 2).

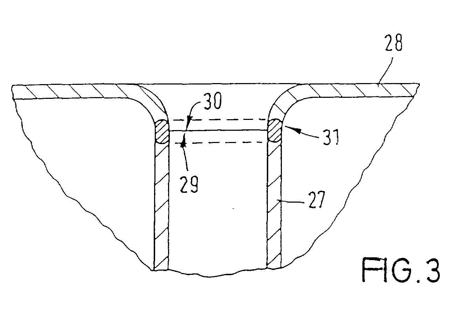

Die Figur 3 zeigt das Ende eines Wärmetauscherrohrs 27, welches mit einer Kunststoffolie 28 verbunden ist, indem die Stoßkanten 29 des Wärmetauscherrohrs 27 und die Stoßkante 30 einer Aushalsung 31 der Kunststoffolie 28 stumpf miteinander verschweißt sind.

Die Verschweißung ist, wie vorstehend beschrieben, durch induktive Erwärmung und Nutzung des hier nicht dargestellten metallischen Innenrohrs als Wärmeübertrager vorgenommen worden.

## Patentansprüche

1. Verfahren zur schweißtechnischen Verbindung des Endbereichs eines kunststoffummantelten Wärmetauscherrohrs (2, 27) mit einer einen Rohrboden eines Wärmetauschers flächig auskleidenden Kunststofffolie (5, 28), die mit einer an die Konfiguration des Wärmetauscherrohrs (2, 27) angepassten Aussparung (6, 31) versehen wird und nach Lageorientierung des Wärmetauscherrohrs (2, 27) in der Verbindungsposition mit der Kunststofffolie (5, 28) eine partielle Plastifizierung des Kunststoffs des Wärmetauscherrohrs (2, 27) und der Kunststofffolie (5, 28) im Kontaktbereich (9) durch induktive Erwärmung vorgenommen wird, wonach eine fluiddichte Verbindung zwischen Wärmetauscherrohr (2, 27) und Kunststofffolie (5, 28) durch Erkalten der Schmelze erfolgt, **dadurch gekennzeichnet**, dass das Wärmetauscherrohr (2, 27) ein metallisches Innenrohr (3) und eine Ummantelung (4) aus Kunststoff aufweist und die induktive Erwärmung unter Nutzung des Innenrohrs (3) als metallischen Wärmeübertrager (8) erfolgt, wobei die Induktionsspule (7) in das Wärmetauscherrohr (2, 27) eingeführt und das metallische Innenrohr (3) partiell erwärmt wird.

2. Verfahren nach Anspruch 1, **dadurch gekennzeichnet**, daß die Kunststoffolie bei der Lageorientierung des Kunststoffrohrs ausgehalst und im Kontaktbereich tangential an den Außenumfang des Kunststoffrohrs angedrückt wird.

3. Verfahren nach einem der Ansprüche 1 oder 2, **dadurch gekennzeichnet**, daß das Kunststoffrohr und die Kunststoffolie im Kontaktbereich rechtwinkelig zueinander ausgerichtet werden.

4. Verfahren nach einem der Ansprüche 1 bis 3, **dadurch gekennzeichnet**, daß die induktive Erwärmung material- und dimensionsabhängig geregelt wird.

## Claims

1. A method for connecting by welding the end zone of a plastic-sheathed heat-exchanger tube (2, 27) to a plastic film (5, 28) forming a flat lining on a tube plate of a heat exchanger, said plastic film being provided with an opening (6, 31) adapted to the configuration of the heat-exchanger tube (2, 27) and, after positional orientation of the heat-exchanger tube (2, 27) in the connecting position to the plastic film (5, 28), partial plasticisation of the plastic of the heat-exchanger tube (2, 27) and of the plastic film (5, 28) in the contact zone (9) is effected by inductive heating, whereafter a fluid-tight connection between the heat-exchanger tube (2, 27) and the plastic film (5, 28) is effected by cooling of the melt, characterised in that the heat-exchanger tube (2, 27) comprises a metal inner tube (3) and a sheathing (4) of plastic and the inductive heating is effected using the inner tube (3) as a metal heat transfer medium (8), the induction coil (7) being introduced into the heat-exchanger tube (2, 27) and the metal inner tube (3) being partially heated.

2. A method according to claim 1, characterised in that during the positional orientation of the plastic tube the plastic film is necked out and in the contact zone is pressed tangentially against the outer periphery of the plastic tube.

3. A method according to claim 1 or 2, characterised in that the plastic tube and the plastic film are aligned at right angles to one another in the contact zone.

4. A method according to any one of claims 1 to 3, characterised in that the inductive heating is controlled in dependence on the material and dimensions.

## Revendications

1. Procédé de liaison, selon une technique de soudage, d'une partie d'extrémité d'un tube (2, 27) d'un échangeur de chaleur, qui est enveloppé d'une matière plastique, à une feuille de matière plastique (5, 28), qui habille en nappe une plaque porte-tubes d'un échangeur de chaleur et qui est pourvue d'un évidement (6, 31) adapté à la configuration du tube (2, 27) de l'échangeur de chaleur, et selon lequel après une orientation du tube (2, 27) de l'échangeur de chaleur dans la position de liaison avec la feuille de matière plastique (5, 28), on réalise une plastification partielle de la matière plastique du tube (2, 27) de l'échangeur de chaleur et de la feuille en matière plastique (5, 28) dans la zone de contact (9) au moyen d'un chauffage inductif, à la suite de quoi une liaison étanche aux fluides est établie entre le tube (2, 27) de l'échangeur de chaleur et la feuille de matière plastique (5, 28) par refroidissement de la masse fondue,
caractérisé en ce que le tube (2, 27) de l'échangeur de chaleur possède un tube intérieur métallique (3) et une gaine en matière plastique (4), et que le chauffage inductif s'effectue en utilisant le tube intérieur (3) en tant que dispositif métallique de transfert de chaleur (8), la bobine d'induction (7) étant introduite dans le tube (2, 28) de l'échangeur de chaleur et chauffant partiellement le tube intérieur métallique (3).

2. Procédé selon la revendication 1, caractérisé en ce que lors de l'orientation en position du tube en matière plastique, on fait ressortir la feuille de matière plastique pour qu'elle forme un collet on la serre tangentiellement, dans la zone de contact, contre la périphérie extérieure du tube en matière plastique.

3. Procédé selon l'une des revendications 1 ou 2,
caractérisé en ce qu'on oriente le tube en matière plastique et la feuille de matière plastique réciproquement à angle droit dans la zone de contact.

4. Procédé selon l'une des revendications 1 à 3,
caractérisé en ce qu'on règle le chauffage inductif en fonction du matériau et des dimensions.
